Europäisches Patentamt

(19) European Patent Office

Office européen des brevets

(11) Publication number: **0 259 529**
**B1**

# (12) EUROPEAN PATENT SPECIFICATION

(45) Date of publication of the patent specification:
28.11.90

(51) Int. Cl.⁵: **B32B 17/10,** C03C 27/12,
B44F 1/06, B44C 5/08

(21) Application number: 86307042.1

(22) Date of filing: 12.09.86

(54) Lamination of glazing panels.

(43) Date of publication of application:
16.03.88 Bulletin 88/11

(45) Publication of the grant of the patent:
28.11.90 Bulletin 90/48

(84) Designated Contracting States:
AT BE CH DE FR IT LI LU NL SE

(56) References cited:
EP-A- 0 056 719
FR-A- 1 448 184
FR-A- 2 145 636
GB-A- 1 600 867
GB-A- 2 032 844
GB-A- 2 051 659
GB-A- 2 155 856
LU-A- 80 642
US-A- 2 020 178
US-A- 3 460 303

(73) Proprietor: Hickman, James Arthur Albert, 14a Seaforth
Drive, Edinburgh Scotland(GB)

(72) Inventor: Hickman, James Arthur Albert, 14a Seaforth
Drive, Edinburgh Scotland(GB)

(74) Representative: Newby, Martin John et al, J.Y. & G.W.
Johnson Furnival House 14-18 High Holborn, London
WC1V 6DE(GB)

ACTORUM AG

## Description

This invention relates to a method of producing a laminated glazing unit comprising introducing an exothermically setting liquid resin material between a first glazing panel and a second glazing panel arranged in face-to-face relationship and sealed together arround at least part of their peripheries in a liquid-tight manner and allowing the liquid resin material to set. The invention also relates to a laminated glazing unit. Known methods of producing laminated glazing units by the introduction of liquid resin material between spaced apart glazing panels are disclosed in GB A 2 155 856 and GB A 2 032 844. Although not specifically referred to as being exothermically setting, the resin material specifically referred to in GB A 2 155 856 can be described as being exothermically setting. Neither of these specification, however, relate to the production of laminated leaded glazing units.

A leaded glazing panel is normally considered to be a glazing panel, constructed of small panes of coloured or clear glass, built into lead cames, which hold each individual pane in position to form an overall pictorial scene or design.

A disavantage of known leaded glass or glazing panels is that they deteriorate in quality when exposed to the atmosphere, either because of the climatic elements and atmospheric conditions or because they become dirty and are difficult to clean. In addition such leaded glazing panels are inherently weak due to their very method of construction in which separate pieces of glass are fitted into lead cames. Also it is difficult to produce multiple, e.g. double, glazing units incorporating a leaded glazing panel since the conventional leaded panels are not air-tight.

The present invention seeks to provide a method of producing a laminated glazing unit having a leaded glazing panel.

According to one aspect of the present invention there is provided a method of producing a laminated glazing unit as claimed in claim 1. The present invention thus enables the production of a laminated leaded glazed panel. Such glazed panels are desirable for a number of reasons. Firstly a first glazing panel laminated to a second leaded panel, serves to protect the second panel. For example when the first glazing panel is on the outside of a window it protects the second leaded panel from climate elements and atmospheric pollution. Additionally some resin material will provide a complete barrier to the transmission of ultra violet light, which is vitally important to materials used in leaded panels, which are affected by ultra violet light with subsequent loss of colour. Furthermore external cleaning of such a glazing unit is rendered much easier than is the case with an unlaminated panel, where the lead cames are exposed either externally or internally. For instance with unlaminated leaded glass, it is impossible to keep leaded panels adequately clean and as a result they suffer from gradual degradation of colour and clarity. With a laminated leaded glazing panel, the second glazing panel may be laminated on one face or on each side of the leaded panel, as desired for protecting the glazing unit.

Finally the structural strength of a leaded glazing panel can be greately improved by laminating. For example a laminated leaded glazing unit has far greater structural strength than an unlaminated unit which is inherently weak due to the very method of construction of fitting separate pieces of glass in lead cames. The laminating method of the invention thus enables much larger leaded panels to be manufactured and installed than normal, and will also prevent the gradual sagging of lead cames which deteriorate with time and therefore eliminate expensive leaded panel rebuilding costs. The cleaning and/or priming of the lead cames with a primer or bonding agent ensures that the peripheral seal and resin material adhere to the lead cames. This is particularly important for ensuring good adhesion of the resin material to the lead during expansion and contraction which occurs during curing of the resin material.

The exothermically setting liquid resin material is typically a methacrylate resin of low or high viscosity, as required, although other types of resin or resin based products, are also suitable for these applications.

By way of example high viscosity resin is more surable for laminating or resin bonding leaded panels. Methacrylate resins are particularly suitable since both low and high viscosity methacrylate resins can be made particularly clear, even with a greater clarity than glass itself, and are obtained by mixing, by hand or machine, catalysts with resin for subsequent dispensing by hand pouring or pressure injecting between the two faces, preferably with the panes in an inclined position for gravity filling. Methacrylate resins such as manufactured by Degussa AG, Frankfurt and Rohmn of West Germany are preferred for resin laminating because of their high quality, stability and clarity.

Preferably the glazing unit is cooled during the setting of the liquid resin material. Such cooling is generally necessary when high ambient room temperature occur, e.g. during the hotter summer months, but may not be required at other times, e.g. during the cooler winter months. Preferably the cooling of the glazing panels is controlled so that the temperature of each glazing panel does not exceed 27°C. Typically cooling of the glazing panels, continues for at least two hours, e.g. 4 hours, after the liquid resin material has been introduced between the glazing panels. Cooling of the glazing panels is preferably by means of gas, e.g. air, cooling although liquid, e.g. water, cooling is also possible. Depending on the design and size of the glazing panels used it is possible to cure the panels without cooling, although an element of risk of damage to the panels is involved.

The glazing panes are preferably sealed, e.g. by transparent silicone material, against resin leakage prior to arranging the glazing panels in face-to-face relationship. It is possible for a special cement or sealant to be used in the channels of the lead cames holding the glass to prevent air or resin leakage. The peripheral seal can suitably be formed by solid adhesive tape, silicone sealant or a combination of both although other suitable sealant or material, sufficient to prevent leakage, either with or without peripheral pressure may be provided for the peripheral seal.

According to another aspect of the present invention there is provided a laminated glazing unit as claimed in claim 10.

An embodiment of the invention will now be described, by way of example, with reference to the accompanying drawing, in which:

Figure 1 is a partial sectional view of a laminated leaded glazing unit according to the invention,

Figure 2 is a schematic view of a step in the manufacture of the glazing unit shown in Figure 1, and

Figure 3 is a schematic view of a step in the manufacture of a different glazing unit.

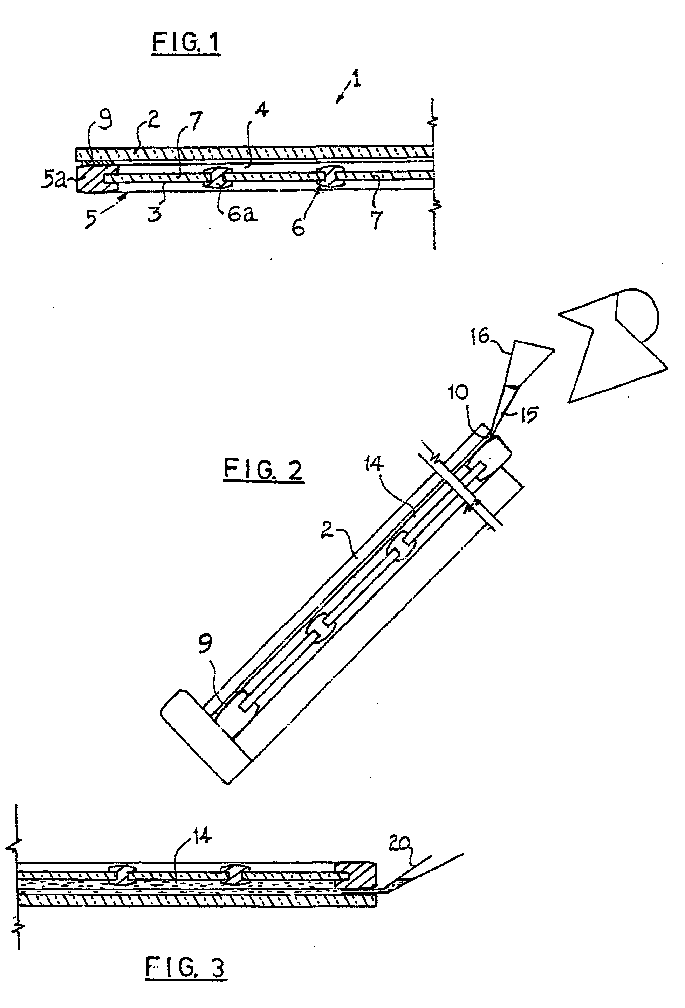

A laminated glazing unit 1 (see Figure 1) comprises a first glazing panel 2, typically transparent float glass, a leaded second glazing panel 3 and a set, preferably transparent, resin material 4 between the panels 2 and 3. The leaded second glazing panel 3 comprises a frame 5 of lead cames 5a supporting a latticework 6 of narrower lead cames 6a, the lead cames 5a and 6a providing a framework into which a plurality of glazing panes 7, e.g. clear or coloured stained diamond or square shaped glass panes, are cemented.

The laminated glazing unit 1 is made by firstly carefully cleaning the glazing panels 2 and 3. For the leaded second glazing panel 3 the cleaning operation, in addition to cleaning of the glazing material, also involves removal of dirt and deposits from the lead cames 5a and 6a. All the lead joints of the glazing panel 3 are then visually checked for tightness and, if any loose joints are found, these are primed with silicone material or the like.

It is also advisable at this stage of the manufacture to ensure that each pane 7 is fixed in the came framework in an at least liquid-tight, and, preferably also airtight, manner to safeguard against possible resin and air leakage during the subsequent laminating stage, which leakage would render an expensive leaded panel completely useless. If it is deemed necessary to provide liquid-tight joints for at least some or all of the panes 7, this is effected by carefully priming the joints with a silicone sealer or the like and thereafter pointing around the perimeter of the panes.

The cleaned lead cames 5a (and possibly also the lead cames 6a) are then primed with sealer. A double sided adhesive tape 9 is then applied peripherally to an upwardly facing surface of the frame 5 of the glazing panel 3 which is positioned substantially horizontally. The tape 9 is applied slightly inwardly, e.g. 2mm, of the peripheral edge of the frame 5. The glazing panel 2 is then positioned above the glazing panel 3 in face-to-face relationship therewith and is lowered onto the tape 9 before being pressed thereagainst to ensure adhesion. The tape 9 is of sufficient thickness to ensure that the glazing panels 2 and 3 are spaced apart so as not to contact each other. If desired, the glazing panel 2 may be lowered directly onto an exposed, adhesive face of the tape 9. However, the positioning of the glazing panels is facilitated if the panel 2 is lowered onto non-adhesive release or covering paper already present on the adhesive face of the tape, the release paper being peeled off the adhesive tape 9 and the glazing panels 2 and 3 pressed firmly together after the glazing panel 3 has been accurately positioned relative to the glazing panel 2. The tape 9 between the glazing panels 2 and 3 provides a liquid-tight barrier around the peripheries of the panels 2 and 3. Alternatively it is possible to assemble the glazing panels in a face-to-face relationship by means of holding the panels apart at their peripheries with small wedges at intervals, as desired, then sealing the resultant gap with silicone or similar sealant, removing, after the sealant has set, the wedges, filling the gaps vacated by the wedges with silicone or similar sealing material and allowing this material to set before resin filling. It is also possible for perimeter sealing to use other adhesive materials such as polysulphide, butyl, polyisobutylene, hot melt materials and most materials used in the construction of double glazing units. In addition, it is possible to use solid and semi-solid materials which have a highly adhesive surface.

It is important, however, to leave a gap or opening in the peripheral seal to provide a filling opening 10 for the introduction of laminating resin material. The filling opening 10 may also serve as a hole for excavation of air during the after the introduction of the laminating marerial. However at least one additional or alternative air hole may be provided for this purpose. If the tape 9 is gas permeable, the air evacuation holes may be omitted.

Since the tape 9 was applied slightly inwardly of the peripheral edge of the frame, a channel shaped peripheral recess exists outwardly of the tape 9 between the glazing panels 2 and 3. This peripheral recess is now filled with strong adhesive sealant, e.g. silicone sealant or the like, taking care not to cover the filling opening 10 (and air holes if provided). The sealant is then allowed to cure.

The assembly of spaced-apart glazing panels 2 and 3 is then supported in an inclined position (see Figure 2) with the filling opening 10 uppermost. Typically the panels are inclined at an angle of from 15° to 65°, preferably from 20° to 40°, e.g. 30°, to the horizontal. A broad but thin spout 15 of a funnel 16 is then inserted into the filling opening 10 and previously prepared exothermically settiang liquid resin material (the quantity of which has been previously calculated) is poured or injected through the funnel downwardly into the interspace 14 between the panels 2 and 3. The funnel or entry guide can be of any acceptable shape or size.

The exothermically setting liquid resin material may be any conventional liquid binder used in the manufacture of laminated safety glass. However, particularly preferred resin material is obtained by mixing, e.g. hand mixing or machine mixing, methacrylate resin, (the designated resins and catalysts are manufactured by Degussa AG, and Rohmn, West Germany). The resin material is prepared by measuring out a predetermined quantity of selected resin by slowly pouring the latter into a measuring beaker and allowing it to degas sufficiently to ensure no micro bubbles are held in the basic resin.

The actual rate of degassing is dependent on the temperature of the operating environment. When the selected resin is absolutely clear, and has no trapped air therein, the catalysts are slowly poured into the resin and gently but thoroughly, stirred, care being taken to ensure adequate mixing without generating air micro bubbles. If bubbles are generated during mixing, sufficient time must be allowed to elapse for them to dis pense. Catalysts are added to the selected resin, suitably at ratios of from 100:1 by volume to 100:0.5 by volume. However, these ratios are only an approximate guide and can be substantially altered to affect clarity, strength and curing rate of the resin material. The resin and catalysts can also be mixed at the above ratio by special mixing machines and dispensed or injected into the entry funnel or opening. Typically the viscosity of the liquid resin material during pouring is less than 5 cSt, e.g. 3.1 cSt, at 20°C although effective pouring can be obtained at higher viscosities of, for example, up to 25 cSt at 20°C.

The actual pouring of the prepared resin material into the interspace 14 between the panels 2 and 3 should be performed with great care to minimise the creation of air bubbles in the interspace. However, because of the construction of the leaded glazing panel 3 and the irregular contours inside the filling interspace 14, there are normally a large number of air bubbles trapped behind the lead cames. To displace these bubbles, the glazing panel assembly is raised into a vertical position and each air bubble is carefully moved or displaced by vibrating the panel assembly and by tapping the glazing panels 2, 3 at each air bubble location until all the air bubbles have been displaced to the top of the resin material. The panel assembly is then lowered into a horizontal position and air from the air bubbles is evacuated through the air holes or the filling opening 10. When all the bubbles have been evacuated, the air holes and filling opening 10 are carefully sealed with mastic. If any air bubbles remain after sealing they can be removed through the tape by means of an air vacuum pump, syringe or other well known types of air extractor.

The panel assembly is now ready in the horizontal position for curing. As a result of the varying thicknesses of resin material in the panel interspace 14 and because of the increased thickness of resin material over that normally used in resin laminating of glass using clear float glass and/or figured glass which is necessary to ensure that the glazing panel 2 is spaced from the lead cames 5a and 6a, a problem of chemical heat build up in the exothermically setting resin material occurs. Furthermore, if curing proceeds too quickly, the resin material shrinks. In order to prevent certain types of expensive and specially made glass from cracking or fracturing as a result of excess resin heat or resin shrinkage, it is necessary to prevent the panel assembly from overheating. As the curing process time is controlled by the ambient temperature of the room in which the panel assembly is stored for curing, the curing time can be determined. It has been experimentally established that by ensuring that the temperatures of the glazing panels 2 and 3 of the panel assembly are kept below 27°C by means of air cooling or water cooling for approximately 4 hours - checking the panel assembly temperature approximately every 30 minutes - a successful resin cure can be effected without any resultant fractures or tears or damage to the leaded panel 3.

After the curing process is complete the filling opening 10 and air evacuation holes are re-sealed with silicone, finally completing the lamination.

It should be noted that where required multi-lamination on either side of the leaded panel can be effected using the emthod described herein.

It is possible to laminate a leaded panel in the manner described, without carrying out all the operations described, for example mot cleaning the lead cames, or checking joints for air tightness, using different peripheral sealing mastic; but the quality of the finished product is uncertain and may be of an unacceptable standard. The preferred method described produces consistent quality results. It is also possible to colour clear leaded panels, by colour tinting the resin as desired before its introduction between the panels to be bonded.

In an alternative embodiment, a special resin filling funnel 20 (see Figure 3) is left in the filling opening 10 during setting of the resin material. Such a funnel 20 is used when it is deemed that because of size and calculation of the resin, unacceptably large forces would act upon the leaded glass panel. In this case the resin material is poured through the funnel 20 to fill the interspace 14 and also partly to fill the funnel 20 and the panel assembly is left in a resin setting position. This enables the introduced resin material, when beginning expansion on the commencement of the cure, to push surplus resin material up or out of the funnel 20, removing any stress on particularly the leaded glass panel. Similarly when the resin curing progresses, contraction begins and the required amount of resin is then drawn back into the funnel via the filler, again minimising any stress. When this phase has been completed, the funnel 20 is removed and the filling opening 10 is sealed. This method of allowing the resin material to expand and contract freely, is only possible with resin material, such as the methacrylate resin described herein, which will not cure when exposed to air, therefore permitting free rise and fall within the expansion filler of funnel.

Arising from the lamination of leaded glass panels, it is now possible, for the first time, to successfully manufacture a leaded glass double glazing unit to an acceptable standard. The construction and benefits of double glazing units are well known, particularly as disclosed in GB-B 2 077 834. However, because of the flexing, expansions and contraction of the laminated leaded panel in a double glazed unit, when exposed to extreme temperatures, the construction of the double glazed unit must be to a very high standard as, for example, disclosed in GB-B-2 077 834. The construction of a double glazed until with a laminated or leaded panel can be carried out in two ways. Firstly, the face of the laminated panel having the smooth or float glass surface can be constructed with the float glass face innermost, as in a normal manufacture of a double glazed unit.

This has the advantage that it presents the leaded face inside to the building. This would be desirable in most instances. However, where the leaded face faces into the cavity of the unit, by reason of inaccessibility for cleaning or such like, the leaded face can be successfully sealed innermost in a double glazed unit. However, this requires very high standard of construction and performance of sealants such as described in GB-B 2 077 834. It is preferable that a primary seal, e.g. of polyisobutylene, is used in construction with preferably a sealant which will permit maximum flexing of the laminated leaded or stained glass panel, therefore minimizing the possibility of a cracked pane in the leaded panel, or the clear laminated pane.

A number of manufactured laminated leaded glass panels have been incorporated in double glazed test units assembled according to GB-B 2 077 834, with the leaded face outwards. These test units were tested in West Germany to the German DIN Standard No. 52,344 and all the test units successfully passed the test ensuring their suitability for all climates and conditions.

## Claims

1. A method of producing a laminated glazing unit comprising introducing an exothermically setting liquid resin material between a first glazing panel (2) and a second glazing panel (3) arranged in face-to-face relationship and sealed together around at least part of their peripheries in a liquid-tight manner and allowing the liquid resin material to set, characterised in that the second glazing panel (3) is a leaded glazing panel having glazing panes held together in a sealed air-tight manner by lead cames, and in that the lead cames are cleaned and/or primed with a primer or bonding agent prior to arranging said first and second glazing panels in face-to-face relationship.

2. A method according to claim 1, characterised in that the liquid resin material comprises methacrylate resin material.

3. A method according to claim 1 or 2, characterised in that the first and second glazing panels (2, 3) are arranged at an angle to the horizontal during introduction of the liquid resin material between the panels through an unsealed upper portion (10) of the periphery of the glazing panels and that the glazing panels (2, 3) are subsequently moved into a substantially horizontal position to enable air to be expelled from between the panels and the introduced liquid resin material to set.

4. A method according to claim 3, characterised in that the first and second glazing panels are peripherally sealed by gas-permeable strip material (9) sandwiched between the peripheries of the first and second glazing panels (2, 3) and in that said unsealed upper peripheral portion (10) is sealed prior to moving the glazing panels into said substantially horizontal position.

5. A method according to claim 3 characterised in that the first and second glazing panels (2, 3) are peripherally sealed by strip material (9), which is at least substantially impervious to gas passing through, sandwiched between the peripheries of the first and second glazing panels, in that said unsealed upper peripheral portion (10) is sealed, apart from the provision of at least one air gap, prior to moving the glazing panels into said substantially horizontal position and in that said at least one air gap is subsequently sealed when the air has been expelled from between the glazing panels with the glazing panels in said substantially horizontal position.

6. A method according to claim 5, characterised in that silicone sealing material is applied outwardly of the strip material.

7. A method according to claim 4 or 5, characterised in that the first and second glazing panels are peripherally sealed with double-sided adhesive strip material (9) sandwiched between the glazing panels.

8. A method according to any of the preceding claims, characterised in that the glazing panel assembly is cooled during setting of the liquid resin material.

9. A method according to any of the preceding claims, characterised in that a filling funnel (16) for resin material is inserted between the first and second glazing panels, in that the liquid resin material is introduced between the glazing panels via said funnel (16), and in that the funnel is removed from between the glazing panels after expansion and contraction has occurred of the liquid resin material during the resin setting process.

10. A laminated glazing unit comprising a first glazing panel (2), a second glazing panel (3) and a resin interlayer between the first and second glazing panels formed by introducing resin material in liquid form between the first and second glazing panels and allowing the resin material to set between the glazing panels, characterised in that the second glazing panel (3) comprises a leaded glazing panel formed, prior to the introduction of the liquid resin material, of glazing panel held together in a sealed, liquid-tight manner by previously cleaned and/or primed lead cames.

## Patentansprüche

1. Verfahren zur Herstellung einer Verbundverglasungseinheit, bei dem man ein sich exotherm verfestigendes flüssiges Harzmaterial zwischen eine erste Verglasungsplatte (2) und eine zweite Verglasungsplatte (3) einführt, die gegenüberliegend angeordnet und um mindestens einen Teil ihrer Umfänge flüssigkeitsdicht zusammen abgedichtet sind, und das flüssige Harzmaterial sich verfestigen läßt, dadurch gekennzeichnet, daß es sich bei der zweiten Verglasungsplatte (3) um eine verbleite Verglasungsplatte handelt, die durch Bleisprossen in abgedichteter luftdichter Weise zusammengehaltene Verglasungsscheiben aufweist, und daß die Bleisprossen gereinigt und/oder mit einem Primer oder Haftmittel versehen werden, bevor jene erste und zweite Verglasungsplatte gegenüberliegend angeordnet werden.

2. Verfahren nach Anspruch 1, dadurch gekennzeichnet, daß das flüssige Harzmaterial aus Methacrylatharzmaterial besteht.

3. Verfahren nach Anspruch 1 oder 2, dadurch gekennzeichnet, daß die erste und zweite Verglasungsplatte (2, 3) während der Einführung des flüssigen Harzmaterials durch einen nicht abgedichteten oberen Teil (10) des Umfanges der Verglasungsplatten zwischen die Platten in einem Winkel zur Horizontalen angeordnet sind, und daß die Verglasungsplatten (2, 3) danach in eine im wesentlichen horizontale Position bewegt werden, so daß die Luft zwischen den Platten entweichen und sich das eingeführte flüssige Harzmaterial verfestigen kann.

4. Verfahren nach Anspruch 3, dadurch gekennzeichnet, daß die erste und zweite Verglasungsplatte umfangsmäßig durch ein gasdurchlässiges Streifenmaterial (9) abgedichtet werden, das zwischen den Umfängen der ersten und zweiten Verglasungsplatte (2, 3) liegt, und daß jener nicht abgedichtete obere Umfangsteil (10) abgedichtet wird, bevor die Verglasungsplatten in jene im wesentlichen horizontale Position bewegt werden.

5. Verfahren nach Anspruch 3, dadurch gekennzeichnet, daß die erste und zweite Verglasungsplatte (2, 3) umfangsmäßig durch Streifenmaterial (9) abgedichtet werden, das zumindest im wesentlichen gegen hindurchgehendes Gas undurchlässig ist und zwischen den Umfängen der ersten und zweiten Verglasungsplatte liegt, daß jener nicht abgedichtete obere Umfangsteil (10), abgesehen davon, daß mindestens ein Luftspalt vorgesehen ist, abgedichtet wird, bevor die Verglasungsplatten in jene im wesentlichen horizontale Position bewegt werden, und daß jener mindestens eine Luftspalt nachfolgend abgedichtet wird, wenn die Luft zwischen den sich in jener im wesentlichen horizontalen Position befinden den Verglasungsplatten entwichen ist.

6. Verfahren nach Anspruch 5, dadurch gekennzeichnet, daß Silikonabdichtungsmaterial außen auf das Streifenmaterial aufgebracht wird.

7. Verfahren nach Anspruch 4 oder 5, dadurch gekennzeichnet, daß die erste und zweite Verglasungsplatte umfangsmäßig mit zwischen den Verglasungsplatten liegendem doppelseitigem Klebestreifenmaterial (9) abgedichtet ist.

8. Verfahren nach einem der vorhergehenden Ansprüche, dadurch gekennzeichnet, daß die Verglasungsplattenanordnung gekühlt wird, während sich das flüssige Harzmaterial verfestigt.

9. Verfahren nach einem der vorhergehenden Ansprüche, dadurch gekennzeichnet, daß zwischen der ersten und zweiten Verglasungsplatte ein Fülltrichter (16) für Harzmaterial eingefügt wird, daß das flüssige Harzmaterial über jenen Trichter (16) zwischen die Verglasungsplatten eingeführt wird, und daß der Trichter aus den Verglasungsplatten entfernt wird, nachdem sich das flüssige Harzmaterial während des Verfestigungsvorgangs des Harzes ausgedehnt und zusammengezogen hat.

10. Verbundverglasungseinheit mit einer ersten Verglasungsplatte (2), einer zweiten Verglasungsplatte (3) einer Harzzwischenschicht zwischen der ersten und zweiten Verglasungsplatte, die dadurch gebildet wird, daß man Harzmaterial in flüssiger Form zwischen die erste und zweite Verglasungsplatte einführt und das Harzmaterial sich zwischen den Verglasungsplatten setzen läßt, dadurch gekennzeichnet, daß die zweite Verglasungsplatte (3) eine verbleite Verglasungsplatte umfaßt, die vor der Einführung des flüssigen Harzmaterials aus durch vorher gereinigte und/oder mit einem Primer versehene Bleisprossen in abgedichteter luftdichter Weise zusammengehaltenen Verglasungsscheiben gebildet wird.

## Revendications

1. Procédé de production d'un vitrage en verre feuilleté suivant lequel on introduit une résine liquide à durcissement exothermique entre une première vitre (2) et une seconde vitre (3) disposées face à face et scellées l'une à l'autre autour d'au moins une partie de leurs périphéries d'une manière étanche aux liquides et on laisse durcir la résine liquide, caractérisé en ce que la seconde vitre (3) est une vitre mise en plomb dont les pièces de verre sont maintenues assemblées d'une manière scellée étanche à l'air par des baguettes de plomb, et que ces baguettes de plomb sont nettoyées et/ou enduites d'une couche de fond ou d'un agent adhésif avant de disposer la première et la seconde vitre face à face.

2. Procédé suivant la revendication 1, caractérisé en ce que la résine liquide est une résine méthacrylate.

3. Procédé suivant la revendication 1 ou 2, caractérisé en ce que la première et la seconde vitre (2, 3) sont disposées sous un angle par rapport à l'horizontale pendant l'introduction de la résine liquide entre elles à travers une partie supérieure non scellée (10) de leurs périphéries et que les vitres (2, 3) sont par la suite amenées dans une position en substance horizontale pour permettre l'expulsion de l'air se trouvant entre les panneaux et le durcissement de la résine liquide introduite.

4. Procédé suivant la revendication 3, caractérisé en ce que la première et la seconde vitre sont scellées à leurs périphéries par une bande de matière perméable aux gaz (9) prise en sandwich entre les périphéries de la première et de la seconde vitre (2, 3) et que la partie périphérique supérieure non scellée (10) est scellée avant l'amenée des vitres dans la position en substance horizontale.

5. Procédé suivant la revendication 3, caractérisé en ce que la première et la seconde vitre (2, 3) sont scellées à leurs périphéries par une bande (9) de matière, au moins en substance étanche aux gaz, prise en sandwich entre les périphéries de la première et de la seconde vitre, que la partie périphérique supérieure non scellée (10) est scellée, hormis au moins une ouverture formant évent, avant l'amenée des vitres dans la position en substance horizontale et que ladite au moins une ouverture formant évent est scellée par la suite, lorsque l'air se trouvant entre les vitres a été expulsé, tandis que ces vitres se trouvent dans la position en substance horizontale.

6. Procédé suivant la revendication 5, caractérisé en ce qu'une matière de scellement étanche à base de silicone est appliquée à l'extérieur de la bande.

7. Procédé suivant la revendication 4 ou 5, caractérisé en ce que la première et la seconde vitre sont scellées à leurs périphéries par une bande adhésive à double face (9) prise en sandwich entre les vitres.

8. Procédé suivant l'une quelconque des revendications précédentes, caractérisé en ce que l'ensemble formé par les deux vitres est refroidi pendant le durcissement de la résine liquide.

9. Procédé suivant l'une quelconque des revendications précédentes, caractérisé en ce qu'un entonnoir de remplissage (16) pour la résine est inséré entre la première et la seconde vitre, que la résine liquide est introduite entre les vitres par l'intermédiaire de l'entonnoir (16) et que l'entonnoir est enlevé d'entre les vitres au terme de l'expansion et du retrait de la résine liquide, pendant le processus de durcissement de la résine.

10. vitrage en verre feuilleté comprenant une première vitre (2), une seconde vitre (3) et une couche intercalaire en résine entre la première et la seconde vitre, formée en introduisant de la résine sous une forme liquide entre la première et la seconde vitre et en permettant à cette résine de durcir entre les vitres, caractérisé en ce que la seconde vitre (3) comprend une vitre mise en plomb formée, avant l'introduction de la résine liquide, de pièces de verre maintenues assemblées d'une manière scellée étanche aux liquides par des baguettes de plomb préalablement nettoyées et/ou enduites d'une couche de fond.

## FIG. 1

## FIG. 2

## FIG. 3